# EUROPÄISCHE PATENTSCHRIFT

(11) **EP 0 865 899 B1**
(45) Veröffentlichungstag und Bekanntmachung des Hinweises auf die Patenterteilung: **11.09.2002**
(21) Anmeldenummer: 98104660.0
(22) Anmeldetag: 16.03.1998
(51) Int. Cl.: B29C 51/10, B29C 51/42

(54) **Verfahren zum Herstellen eines geformten flächigen Kunststoffteils**
Method for producing a formed flat thermoplastic article
Procédé pour la fabrication d'une pièce en matière plastique de forme plane

(30) Priorität: 21.03.1997 DE 19711861
(43) Veröffentlichungstag der Anmeldung: 23.09.1998
(73) Patentinhaber: Volkswagen Aktiengesellschaft, 38436 Wolfsburg (DE)
(72) Erfinder: Rieck, Klaus, Dipl.-Ing., 38108 Braunschweig (DE); Herold, Klaus-Peter, Dipl.-Ing., 38165 Lehre (DE)
(74) Vertreter: Schneider, Henry, Dipl.-Ing.

(56) Entgegenhaltungen:
- EP-A- 0 285 071
- DE-A- 2 044 047
- DE-A- 2 103 219
- DE-A- 2 240 769
- DE-A- 19 703 505
- PATENT ABSTRACTS OF JAPAN vol. 012, no. 036 (M-664), 3.Februar 1988 & JP 62 187015 A (SONY CORP), 15.August 1987,

## Beschreibung

Die Erfindung betrifft ein Verfahren gemäß dem Oberbegriff des Anspruchs 1 sowie ein Karosserieteil nach Anspruch 18.

Durch immer höher werdende Anforderungen an die Lackierung im Automobilbau werden die Lacksysteme immer aufwendiger. Gleichzeitig ist auch dem Umweltschutz Rechnung zu tragen, das heißt, bei der Lackierung von Karosserien sollen möglichst wenig Lösungsmittel freigesetzt werden. Hinzu kommt, dass die Rohkarosserien selbst durch Einsatz von Aluminiumteilen, Kunststoffteilen wie beispielsweise Glasfaserkunststoff- oder Kohlefaserteilen aus einem Materialmix bestehen, der in der Regel nur durch den Einsatz sehr dicker Lackschichten, beispielsweise von Füllerschichten und gegebenenfalls auch nur durch Anschleifen von Zwischenschichten sauber lackierbar ist. So bleiben beispielsweise Ziehfiguren auf preiswerteren umgeformten Aluminiumblechen nach einer gewöhnlichen Lackierung sichtbar, so dass in Sichtbereichen nur kostenintensive Aluminiumbleche eingesetzt werden können. Bei der Verwendung von Glasfaser- oder Kohlefaserkunststoffteilen muss die Faserstruktur durch eine verhältnismäßig dicke Füllerschicht, die gegebenenfalls anzuschleifen ist, überdeckt werden, damit deren Struktur nicht durch die Lackschicht hindurch sichtbar bleibt. Auch andere Oberflächenfehler, wie Walzstrukturen oder Bearbeitungsfehler aus dem Rohbau und dem Presswerk müssen im Allgemeinen durch einen erheblichen Aufwand im Rohbaufinish eliminiert werden.

Aus der DE 197 03 505.1 A ist ein farbiges Karosserieteil bekannt, das mit einem umgeformten flächigen Kunststoffteil überzogen ist. Grundsätzlich löst dieses farbige Karosserieteil die oben beschriebene Problematik, die Umsetzung dieses bekannten farbigen Karosserieteils in die Serie gestaltet sich jedoch schwierig, da das bekannte farbige Karosserieteil in sehr engen Grenzen der Prozessparameter herzustellen ist. Sobald diese engen Grenzen verlassen werden, nimmt die Qualität des Kunststoffteils deutlich ab. Beim Vakuumtiefziehen von Folien mit lackierter Oberfläche treten schon bei relativ geringen Umformgraden erhebliche Verluste des Glanzgrades auf, sofern diese Folien nicht im sogenannten Folienhinterspritzverfahren mit einem Kunststoff hinterspritzt werden. Beim Hinterspritzen der Folie mit einem Kunststoff wird die Folie unter hohem Druck und hoher Temperatur von der plastischen Kunststoffmasse mit ihrer Sichtseite gegen eine hochglanzpolierte Werkzeugoberfläche gepresst und übernimmt dabei ihre Eigenschaften (Hochglanz, Strukturfreiheit). Diesen Druck und diese Temperatur kann man bei den üblichen Vakuumtiefziehoperationen, die bei einer Folienumformung ohne Hinterspritzen angewandt werden, nicht erreichen. Ein Pressen der Folie erlaubt nicht die gewünschte feine Konturierung.

Die JP 62 187 015 A beschreibt ein Herstellungsverfahren für Diaphragmen, bei dem ein Polyesterfilm auf ein Formwerkzeug aufgelegt, das Werkzeug mit einem Druckgefäß verschlossen und der Polyesterfilm einseitig mit überhitztem Wasserdampf beaufschlagt und dabei erwärmt und umgeformt wird. Nach Unterbrechung der Wasserdampfzufuhr und Abkühlung wird das Diaphragma aus dem Werkzeug entnommen. Der so umgeformte Kunststofffilm weist jedoch keine Oberflächenvergütung, insbesondere keine farbgebende Schicht auf.

Aufgabe der vorliegenden Erfindung ist es, ein flächiges farbiges Kunststoffteil so umzuformen, dass es eine hohe Oberflächengüte auf zumindest einer seiner Seiten aufweist, so dass es insbesondere für Karosserien ohne nachfolgende Oberflächenbehandlungsschritte eingesetzt werden kann.

Diese Aufgabe wird gelöst mit den Maßnahmen des Verfahrens des Anspruchs 1 und ein Karosserieteil nach Anspruch 18.

Die Unteransprüche zeigen bevorzugte und besonders günstige Maßnahmen.

Bei dem erfindungsgemäßen Verfahren wird ein flächiges Kunststoffteil, das auf einer seiner Hauptflächen eine Farbschicht aufweist, umgeformt, wobei die Hauptflächen des Kunststoffteils eine neue Struktur bekommen. Unter den Hauptflächen eines flächigen Kunststoffteils sind diejenigen gegenüberliegenden Flächen des Kunststoffteils zu verstehen, die zusammen mehr als 50 % und insbesondere mehr als 80 % der gesamten Oberfläche des Kunststoffteils bilden. Solche flächigen Kunststoffteile werden üblicherweise auch als Folien oder Tafeln bezeichnet, wobei das Kunststoffteil eine genügend hohe Steifigkeit hat, um für eine dauerhafte Formgebung geeignet zu sein.

Das flächige Kunststoffteil wird erfindungsgemäß in ein formbestimmendes Werkzeug eingesetzt, wobei das flächige Kunststoffteil mit seiner ersten, die Farbschicht aufweisenden Hauptseite zu einem die Form eines umgeformten flächigen Kunststoffteils bestimmenden Werkzeugteil ausgerichtet ist. Die zweite Hauptseite (die der ersten Seite abgewandten Seite) wird von einem weiteren Werkzeugteil derart umschlossen, dass ein Fluid zwischen dieses Werkzeugteil und die dazugehörige Seite des flächigen Kunststoffteils eingepresst werden kann. Insoweit entspricht das erfindungsgemäße Verfahren dem gemeinhin als "Hinterspritzen von Folien mit einem Kunststoff" bekannten Verfahren. Auch hier wird ein derart in einem formgebenden Werkzeug eingespanntes Kunststoffteil durch Beaufschlagen der zweiten Seite mit dem heißen Fluid gegen das formbestimmende Werkzeugteil gepresst, wobei das flächige Kunststoffteil, das sich hierbei in einem thermoplastischen Zustand befindet, die Form des formbestimmenden Werkzeugteils annimmt.

Im Unterschied zu dem bekannten Hinterspritzen wird erfindungsgemäß das flächige Kunststoffteil auf seiner dem formbestimmenden Werkzeugteil abgewandten Seite nicht mit einer an dem flächigen Kunststoffteil verbleibenden Kunststoffschicht versehen. Hier unterscheidet sich das erfindungsgemäße Verfahren auch von dem bisher bei Folien üblicherweise angewandten Verfahren, wie Tiefziehen oder Pressen.

Nach Erkalten wird das umgeformte Kunststoffteil aus dem Werkzeug entnommen und auf ein Rohkarosserieteil befestigt.

Erfindungsgemäß wird vorteilhaft ein bei der Entformungstemperatur des Kunststoffteils sich nicht verfestigendes Fluid eingesetzt, insbesondere ein Öl oder ein Gas, insbesondere Wasserdampf. Das Fluid wird vorteilhaft auch mit Druck gegen das flächige Kunststoffteil gepresst, wobei bevorzugt Drücke oberhalb 2 bar und insbesondere oberhalb 5 bar zum Einsatz kommen. Außerdem kann das Fluid vorteilhaft auch zur Erwärmung des flächigen Kunststoffteils beitragen beziehungsweise diese Erwärmung weitgehend übernehmen. Die Temperatur des Fluids beträgt hierzu vorzugsweise mindestens 120 °C und insbesondere mindestens 150 °C.

Das erfindungsgemäße Verfahren eignet sich besonders vorteilhaft für flächige Kunststoffteile, deren vorgesehene Umformungstemperatur in einer Temperaturspanne von höchstens 20 K, vorteilhaft höchstens 10 K und insbesondere höchstens 5 K liegen soll, da andernfalls Qualitätsprobleme, wie zum Beispiel Fehlstellen in dem umgeformten Kunststoffteil auftreten. Ganz besonders geeignet sind für das erfindungsgemäße Verfahren farbige Kunststofffolien, die beispielsweise eine Farbschicht auf einer Kunststoffträgerschicht aufweisen. Bei solchen Folien zeichnen sich wiederum diejenigen, die auf der Farbschicht noch eine Schutzschicht liegen haben, für das erfindungsgemäße Verfahren besonders aus. Als Schutzschicht kommen hier insbesondere Transparentschichten zum Einsatz.

Das Befestigen des umgeformten Kunststoffteils auf das Karosserieteil kann beispielsweise durch Kleben oder Verschweißen erfolgen. Als Rohkarosserieteil kommen insbesondere Teile einer Kraftfahrzeugkarosserie zum Einsatz, wobei demontierbare Teile, wie Kotflügel, Türen, Hauben oder Deckel, erfindungsgemäß besonders günstig mit dem umgeformten Kunststoffteil versehen werden.

Das erfindungsgemäße Verfahren eignet sich also zur Kaschierung von Oberflächenfehlern auf Rohkarosserieteilen, die durch Lackieren nicht kaschiert werden können. Im Unterschied zu hinterspritzten Farbschichten kann man erfindungsgemäß verhältnismäßig dünne farbgebende Kunststoffschichten herstellen, die mit einer Kunststoffträgerschicht mit dem Rohkarosserieteil verbunden werden, ohne besonders aufzutragen. Das Kunststoffteil ist hierbei bereits vor dem Aufbringen auf das Rohkarosserieteil durch Umformen in dessen Form gebracht, so dass das Rohkarosserieteil und die Kunststoffträgerschicht im Wesentlichen passgenau zusammengefügt werden können. Für das erfindungsgemäße Verfahren hat das Kunststoffteil also zwei Anforderungen zu erfüllen: zum einen soll das umgeformte Kunststoffteil genügend formstabil sein, um auf ein Rohkarosserieteil aufgezogen werden zu können, wobei das flächige Kunststoffteil wiederum nicht zu dick sein darf, da sonst die zu beschichtende Kontur des Rohkarosserieteils verloren geht; zum anderen soll beim Einsatz einer Farbschicht an dem Kunststoffteil diese so stabil sein, dass sie den Umformungsprozess übersteht, wie auch späteren Umgebungseinflüssen widersteht. Das erste Kriterium kann durch Auswahl des Materials des Kunststoffteils, insbesondere eine Kunststoffträgerschicht und deren Dicke erreicht werden. Als Material für die Kunststoffträgerschicht kommen die üblichen weitgehend formstabilen und verformbaren (thermoplastischen) Kunststoffmaterialien, die verbindbar beziehungsweise beschichtbar sind, in Betracht. Insbesondere extrudierbare Kunststoffsorten sind geeignet, beispielsweise (Hart)Polyvinylchlorid, Polycarbonat, Polyethylenterephthalat, Acrylnitril-Butadien-Styrol (ABS) und auch thermoplastische Olefine. Geeignete Stärken für die Kunststoffträgerschicht liegen üblicherweise im Bereich 200 bis 1800 µm, insbesondere 300 bis 1500 µm, wobei zum Erhalt der Kontur des Rohkarosserieteils möglichst dünne Stärken bevorzugt sind, da sonst eine zu große Kantenverrundung entsteht. Das zweite Kriterium, die Stabilität der Farbschicht, wird vorteilhaft erreicht durch eine Transparentschicht, die über der Außenseite (Sichtseite) der Farbschicht liegt. Vorzugsweise ist die Transparentschicht eine transparente Folie, die mit der Farbschicht verbunden ist. Die Transparentschicht schützt die Farbschicht einerseits bei dem Umformvorgang, so dass hier weder Risse noch Verfärbungen oder Oberflächenbeschädigungen eintreten, und dient andererseits dem Schutz gegen Umwelteinflüsse, so dass die Farbschicht im Wesentlichen nur die erforderlichen Bedingungen hinsichtlich der Haftung, des Farbtons und des Deckgrades erfüllen muss.

Solche lackierten Folien sind prinzipiell aus dem Bereich Kunststoffnormteile bekannt (beispielsweise DE 41 16 437 A und EP 0 285 071 B), wobei die farbigen Folien auch hier, beispielsweise durch Tiefziehen oder Pressen, umgeformt werden, um anschließend durch Hinterspritzen mit einem Kunststoff zu einem endlackierten Kunststoffprodukt verarbeitet zu werden. Erfindungsgemäß können die Folien auch verformt sein, zum Beispiel in einem Vakuumverfahren unter Erwärmung tiefgezogen oder sie werden durch Pressen umgeformt, so dass ein vorgeformter (konfigurierter) Grünkörper entsteht, der der Außenform eines schon bestehenden oder separat herzustellenden Karosseriebauteils nahe kommt. Mit dem danach erfindungsgemäß umgeformten, verhältnismäßig stabilen Trägerfolienmaterial wird anschließend das Rohkarosserieteil flächig bedeckt. Das Verbinden mit dem Rohkarosserieteil erfolgt üblicherweise durch Verkleben mit demselben, kann aber auch durch Verschweißen erfolgen, wobei je nach Dicke der Kunststoffträgerschicht diese auch durch partielles Aufschmelzen mit dem Rohkarosserieteil verbunden werden kann. Neben diesen Befestigungsmöglichkeiten kann das erfindungsgemäße farbige Kunststoffteil auch durch Klemmen oder ähnliches mit dem Rohkarosserieteil verbunden werden.

Das Kaschieren des Rohkarosserieteils mit dem konfigurierten Kunststoffteil gemäß der vorliegenden Erfindung bringt noch den Vorteil, dass praktisch alle Oberflächenfehler des Rohkarosserieteils - anders als beim gewöhnlichen Lackieren - überdeckt werden. So eignet sich die vorliegende Erfindung insbesondere im Aluminium-Karosseriebau, da hier häufig Oberflächenfehler wie Walzstrukturen oder Ziehfiguren auftreten. Ferner eignet sich die Erfindung auch zur Senkung des Reparaturaufwandes nach Unfällen, da hier nur die vorhandene Folie abgelöst, das beschädigte Rohkarosserieteil gerichtet und gespachtelt und ein neues Kunststoffteil aufgeklebt werden muss. Gegenüber den bisherigen Reparaturen mit Teillackierungen bietet die Erfindung wesentlich einfachere und preiswertere Möglichkeiten.

Erfindungsgemäß kann das mit der Farbschicht versehene konfigurierte Kunststoffteil nicht nur auf metallene Rohkarosserieteile, sondern vorteilhaft auch auf Kunststoff-Rohkarosserieteile aufgezogen werden (sofern solche Teile durch das bekannte Hinterspritzen nicht günstiger hergestellt werden können). Solche Rohkarosserieteile sind insbesondere Glasfaser- oder Kohlefaserkunststoffteile, die dem Spritzgießen nicht zugänglich sind.

Ein weiterer Vorteil der vorliegenden Erfindung ist, dass das mit der Farbschicht versehene konfigurierte Kunststoffteil bei entsprechender Auslegung der Steifigkeit nicht vollflächig mit dem Rohkarosserieteil verbunden werden muss. Dies ermöglicht auch den Einsatz von gelochten Rohkarosserieteilen oder Rohkarosserieteilen mit unebener Oberfläche, die eingeebnet werden soll. Vorteilhaft steht das konfigurierte Kunststoffteil jedoch über mindestens 30 % seiner Fläche mit dem Rohkarosserieteil in Kontakt, insbesondere über mindestens 50 %. Auch muss das konfigurierte Kunststoffteil nicht über seine gesamte, das Rohkarosserieteil berührende Fläche mit diesem verbunden sein, vorzugsweise sind jedoch mindestens 30 %, insbesondere mindestens 50 % und besonders bevorzugt mindestens 75 % der Kontaktflächen zwischen Rohkarosserieteil und dem konfigurierten Kunststoffteil fest miteinander verbunden.

Durch das Kaschieren der Oberfläche des Rohkarosserieteils durch das konfigurierte farbige Kunststoffteil wird es möglich, die gesamte Rohkarosserie im Sichtbereich im Materialmix herzustellen, ohne dass dieses anschließend (nach dem Überzug mit einer Farbschicht) noch zu erkennen ist. Dies ist bisher, beispielsweise bei der Verwendung von Frontends oder Außenhautteilen der Karosserie aus (glas)faserverstärktem Kunststoffmaterial nur mit einem sehr großen Aufwand, insbesondere mit einem mehrfachen Grundieren dieser Kunststoffteile möglich.

Die Transparentschicht über der Farbschicht wird üblicherweise in einer Dicke von 10 bis 150 µm, insbesondere 15 bis 100 µm und besonders vorteilhaft 20 bis 75 µm eingesetzt. Da die Transparentschicht üblicherweise nur eine geringe Steifigkeit gegenüber dem Kunststoffträgerschichtmaterial hat, wird die Transparentschicht vorteilhaft verhältnismäßig dünn gewählt. Andererseits ist sie so dick zu wählen, dass sie ihre oben beschriebene Schutzfunktion für die Farbschicht noch erfüllt.

Vorzugsweise ist die Transparentschicht als Folie ausgebildet, das heißt wird als Folie mit der Farbschicht kontaktiert (im Gegensatz zur Bildung einer Transparentschicht durch beispielsweise Aufsprühen eines Kunststoffmaterials auf die Farbschicht). Der Einsatz einer Folie vereinfacht die Herstellung des mit der Farbschicht versehenen Kunststoffteils und die Auswahl des Materials, um die Schutzkriterien zu erfüllen.

Die Kunststoffträgerschicht, deren Dicke bereits oben beschrieben ist, wird vorzugsweise ebenfalls als Folie eingesetzt. Die Farbschicht wird üblicherweise in einer Dicke zwischen 8 µm und 150 µm hergestellt, vorzugsweise 10 bis 100 µm und insbesondere 10 bis 60 µm, wobei die Dicke vorteilhaft so gering wie möglich gewählt wird. Bei der Wahl der Dicke der Farbschicht ist insbesondere der spätere Umformungsgrad zu berücksichtigen, bei dem das Kunststoffmaterial einer (bleibenden) Dehnung unterworfen wird.

Die Farbschicht wird üblicherweise durch Auftragen auf mindestens eine der anderen Schichten, vorzugsweise auf die Transparentschicht hergestellt, wobei übliche Verfahren wie Sprühen, Walzen, Tauchen oder sonstige Applikationen aus der flüssigen Farbphase beziehungsweise mit pulverförmigem Material geeignet sind. Als Farbschicht gelten alle Schichten, die einen definierten Farbton (eingeschlossen auch weiß und schwarz) haben. Besonders vorteilhaft geschieht der Auftrag der Farbschicht im Coil-Coating-Verfahren (Bandbeschichtung), wobei die Farbschicht zuerst auf eine der benachbarten Schichten (insbesondere die Transparentfolie) aufgetragen wird, um - vorzugsweise nach dem Verfestigen der Farbschicht - mit der anderen Schicht (der Kunststoffträgerschicht) verbunden zu werden. Bei dem Aufbringen der Farbschicht auf die Transparentschicht ist es vorteilhaft, wenn die Transparentschicht selbst wiederum auf einer Trägerschicht (einem Trägerfilm) liegt, der ihr die nötige Stabilität verleiht. Die Trägerschicht kann dann anschließend, insbesondere nach dem Verbinden mit der Kunststoffträgerschicht, wieder abgezogen werden. Das Aufbringen der Farbschicht zuerst auf die Transparentschicht bringt den Vorteil, dass anschließend zwischen der Farbschicht und der Kunststoffträgerschicht noch eine haftvermittelnde Schicht (beispielsweise eine Klebstoffschicht) ohne Störung des Farbtons der Farbschicht eingebracht werden kann. Eine solche haftvermittelnde Schicht ist vorteilhaft nur wenige µm stark (1 bis 10 µm, insbesondere 2 bis 6 µm) und wird meist auf die Kunststoffträgerschicht aufgebracht oder auf ihr erzeugt (zum Beispiel durch Corona-Entladung). Hierdurch lässt sich die Kunststoffträgerschicht leicht mit der getrockneten Farbschicht verbinden.

Als Transparentschichten eignen sich übliche transparent (durchsichtig) herstellbare Kunststoffe (auch leicht opake), insbesondere Folien, die mit der Lackschicht verbindbar sind. Aus Gründen der Beständigkeit gegen Umwelteinflüsse werden insbesondere hochwiderstandsfähige Kunststoffsorten wie beispielsweise Polyurethan oder Polyvinylidenfluorid eingesetzt.

Die Erfindung umfasst ferner ein Karosserieteil nach Anspruch 18. Das erfindungsgemäß mit einer Farbschicht versehene Karosserieteil ist aufgebaut aus einem Rohkarosserieteil, dessen Außenseite mit einer Kunststoffträgerschicht verbunden ist, die vor dem Verbinden mit dem Rohkarosserieteil durch das erfindungsgemäße Umformen derart konfiguriert ist, dass die Innenseite der Kunststoffträgerschicht, die mit dem Rohkarosserieteil verbunden wird, die Kontur der Außenseite des Rohkarosserieteils hat. Auf der Außenseite der Kunststoffträgerschicht ist eine Farbschicht und darüberliegend ist vorteilhaft eine Transparentschicht angeordnet. Das Umformen des mit der Farbschicht versehenen Kunststoffteils erfolgt derart, dass die resultierende Konfiguration (Kontur) der gewünschten Außenhaut des zu fertigenden Karosserieteils entspricht, wobei - wie oben beschrieben - das konfigurierte Kunststoffteil vorzugsweise mit großen Flächenanteilen mit dem Rohkarosserieteil verbunden ist. Wie oben bereits ausgeführt, ist die Transparentschicht vorzugsweise eine Folie und die Kunststoffträgerschicht ist vorzugsweise mit dem Rohkarosserieteil verklebt oder verschweißt, Als Rohkarosserieteile eignen sich insbesondere Blechteile - auch Lochbleche - faserverstärkte Kunststoffe sowie Strukturgitterbauteile.

Die Erfindung wird im Folgenden anhand eines Ausführungsbeispiels und Figuren näher beschrieben.

Es zeigen:
- Figur 1: ein mit einer Lackfolie belegtes Werkzeug und
- Figur 2: die umgeformte Lackfolie im Werkzeug.

Auf eine trennbare Verbundfolie, deren eine Schicht zirka 50 µm (Trägerschicht) und deren andere Schicht zirka 30 µm (Transparentschicht) stark ist, wird auf die 30 µm starke Schicht, die aus im Wesentlichen ungefärbtem durchsichtigen (transparenten) Polyurethan ist, ein Lack durch Walzenauftrag im Coil-Coating-Verfahren aufgetragen. Der Lack durchfährt eine Trockenzone, in der das Lösungsmittel des Lackes zurückgewonnen wird. Der getrocknete Lack hat eine Stärke von 20 µm. Nach dem Trocknen des Lackes wird die lackierte Seite des so beschichteten Bandes unter Hitze- und Druckeinwirkung mit einer Kunststoffträgerfolie der Stärke 600 µm verbunden. Die Kunststoffträgerschicht ist aus Acrylnitril-Butadien-Styrol und trägt für eine sichere Verbindung mit der Lackschicht eine zirka 2 bis 4 µm starke Haftvermittlerschicht, die vor der Verbindung mit der Lackschicht auf die Kunststoffträgerschicht aufgetragen wird.

Nach dem Verbinden der Kunststoffträgerschicht mit der Lackfolie (lackierte Transparentschicht) wird die 50 µm starke Trägerschicht abgezogen und der resultierende Lackfolienverbund aufgerollt. Aus dem Lackfolienverbund werden anschließend Formstücke herausgetrennt, die in einem Werkzeug unter Wärmeeinwirkung passgenau zur Bekleidung eines Rohkarosserieteils umgeformt werden. Nach dem Umformen werden von den Folienstücken noch überstehende Ränder abgetrennt. Die so hergestellten Folienstücke werden mit Rohkarosserieteilen verbunden.

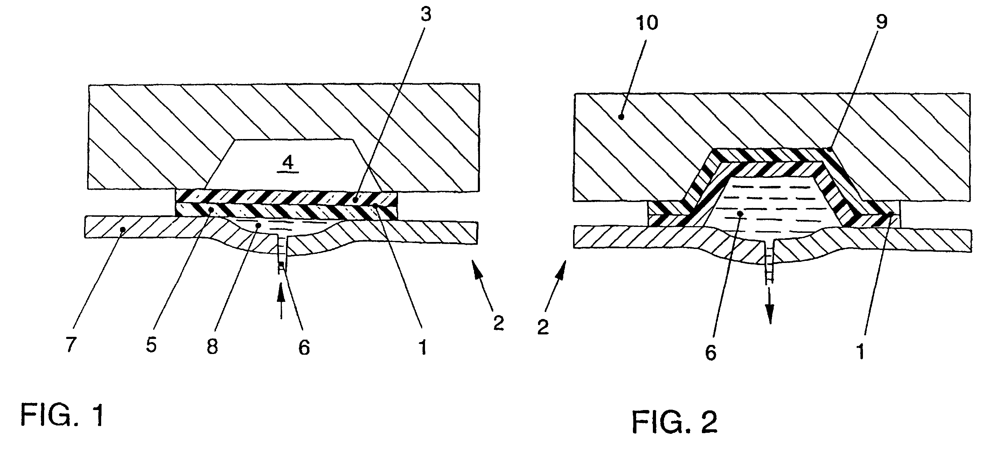

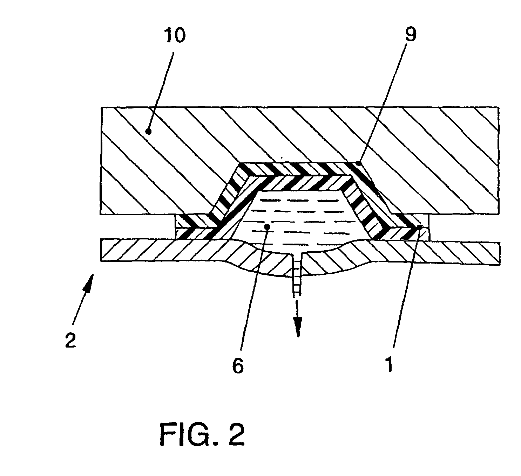

Eine so hergestellte Folie 1 wird, wie in Figur 1 dargestellt, in eine Form 2 eingeklemmt, wobei die mit der Transparentfolie überzogene Farbseite 3 in Richtung auf einen Formhohlraum 4 weist. Gegen die Rückseite der farbigen Kunststofffolie 1, die von einer Kunststoffträgerschicht 5 gebildet ist, wird ein Niederhalter 7 gepresst, der zum einen erwärmt sein kann und zum anderen einen Zwischenraum 8 mit der angrenzenden Folie 1 bilden kann. In diesen Zwischenraum 8 wird nun ein erhitztes Fluid 6 (Wasserdampf von 140 °C) eingepresst (Pfeil), das die Folie 1 verformt (Figur 2).

Das erhitzte Fluid 6 presst die Folie 1 in den Hohlraum 4, bis die Folie 1 den Hohlraum 4 auskleidet und dabei dessen Form 9 annimmt. Die umgeformte Folie 1/9 kühlt an dem Formteil 10 der Form 2 ab unter Verfestigung der geformten Struktur 9. Anschließend wird das Fluid 6 (Pfeil) wieder abgelassen beziehungsweise kann, wenn es sich um ein emissionsunschädliches Gas handelt, auch in die Umwelt abgelassen werden. Danach wird die Form 2 geöffnet und das geformte Kunststoffteil 9 entnommen. Dieses kann nun beispielsweise auf ein Karosserieteil geklebt werden.

Erfindungsgemäß wird also eine lackierte Folie druckumgeformt mit einem nicht hinter der Folie erstarrenden heißen Fluid (6). Die Sichtseite (9) der Folie (1) wird dabei analog zum Folienhinterspritzen mit Kunststoff in eine hochglanzbehandelte Form (10) gedrückt. Das Fluid kann beispielsweise Heißdampf sein.

## Patentansprüche

1. Verfahren zur Herstellung eines umgeformten Kunststoff-Karosserieteils, mit den Schritten:
- Einbringen eines flächigen Kunststoffteils in ein formbestimmendes Werkzeug;
- Beaufschlagen einer Seite des flächigen Kunststoffteils mit einem heißen Fluid und Erhitzen des flächigen Kunststoffteils bis zu einem Erweichen des Kunststoffs des flächigen Kunststoffteils;
- Pressen des erhitzten flächigen Kunststoffteils mit dem heißen Fluid mit der der mit dem heißen Fluid beaufschlagten Seite abgewandten Seite gegen das formbestimmende Werkzeug;
- Abkühlen des umgeformten Kunststoffteils bis zu einem Erstarren des Kunststoffs des umgeformten Kunststoffteils;
- Trennen des erkalteten umgeformten Kunststoffteils von dem Fluid und
- Entnehmen des umgeformten Kunststoffteils aus dem Werkzeug,
**dadurch gekennzeichnet, dass** das flächige Kunststoffteil auf der von der mit dem Fluid beaufschlagten Seite abgewandten Seite eine Farbschicht aufweist und das erkaltete umgeformte Kunststoffteil nach dem Entnehmen aus dem Werkzeug auf einem Rohkarosserieteil befestigt wird.

2. Verfahren nach Anspruch 1, **dadurch gekennzeichnet, dass** ein Fluid eingesetzt wird, das eine Verfestigungstemperatur kleiner der Temperatur des erstarrten umgeformten Kunststoffteils hat.

3. Verfahren nach Anspruch 1 oder 2, **dadurch gekennzeichnet, dass** als Fluid ein Gas, insbesondere Wasserdampf, oder ein Öl eingesetzt wird.

4. Verfahren nach einem der vorhergehenden Ansprüche, **dadurch gekennzeichnet, dass** die Farbschicht auf einer Kunststoffträgerschicht liegt.

5. Verfahren nach einem der vorhergehenden Ansprüche, **dadurch gekennzeichnet, dass** die Farbschicht auf der dem formbestimmenden Werkzeug zugewandten Seite von einer Transparentschicht abgedeckt ist.

6. Verfahren nach einem der vorhergehenden Ansprüche, **dadurch gekennzeichnet, dass** das Fluid das Kunststoffteil mit einem Druck > 1 bar, insbesondere > 5 bar, beaufschlagt.

7. Verfahren nach einem der vorhergehenden Ansprüche, **dadurch gekennzeichnet, dass** das das Kunststoffteil beaufschlagende Fluid eine Temperatur ≥ 110 °C, insbesondere ≥120 °C, hat.

8. Verfahren nach einem der vorhergehenden Ansprüche, **dadurch gekennzeichnet, dass** die Befestigung des umgeformten Kunststoffteils auf das Rohkarosserieteil insbesondere durch Verkleben oder Verschweißen erfolgt.

9. Verfahren nach einem der vorhergehenden Ansprüche, **dadurch gekennzeichnet, dass** das umgeformte Kunststoffteil auf einem ausgebesserten beziehungsweise gerichteten Rohkarosserieteil befestigt wird.

10. Verfahren nach Anspruch 8 oder 9, **dadurch gekennzeichnet, dass** das umgeformte Kunststoffteil auf einem metallenen Rohkarosserieteil oder auf einem Rohkarosserieteil aus faserverstärktem Kunststoff befestigt wird.

11. Verfahren nach einem der Ansprüche 8 bis 10, **dadurch gekennzeichnet, dass** das umgeformte Kunststoffteil auf einem gelochten Rohkarosserieteil befestigt wird.

12. Verfahren nach einem der Ansprüche 8 bis 11, **dadurch gekennzeichnet, dass** mehrere Rohkarosserieteile im Materialmix mit und ohne aufgezogenem umgeformten Kunststoffteil eine Karosserie bilden.

13. Verfahren nach einem der Ansprüche 8 bis 12, **dadurch gekennzeichnet, dass** das umgeformte Kunststoffteil über mindestens 30 % seiner Fläche, insbesondere mindestens 50 % seiner Fläche, mit dem Rohkarosserieteil in Kontakt ist.

14. Verfahren nach einem der vorhergehenden Ansprüche, **dadurch gekennzeichnet, dass** das heiße Fluid gegen das flächige Kunststoffteil mit einem Druck von mindestens 2 bar, insbesondere mindestens 3,5 bar, presst.

15. Verfahren nach einem der vorhergehenden Ansprüche, **dadurch gekennzeichnet, dass** das heiße Fluid gegen das flächige Kunststoffteil mit einem Druck von höchstens 10 bar, insbesondere höchstens 6 bar, presst.

16. Verfahren nach einem der vorhergehenden Ansprüche, **dadurch gekennzeichnet, dass** das heiße Fluid mindestens 1 s, insbesondere mindestens 3 s, gegen das flächige Kunststoffteil presst.

17. Verfahren nach einem der vorhergehenden Ansprüche, **dadurch gekennzeichnet, dass** das heiße Fluid höchstens 15 s, insbesondere höchstens 10 s, gegen das flächige Kunststoffteil presst.

18. Karosserieteil mit einem Rohkarosserieteil und einem mit dessen Außenseite verbundenen und mit dem Verfahren nach Anspruch 1 hergestellten umgeformten Kunststoff-Karosserieteil, wobei eine mit dem Rohkarosserieteil verbundene Innenseite des Kunststoff-Karosserieteils die Kontur einer Außenseite des Rohkarosserieteils aufweist, eine von dem Rohkarosserieteil abgewandte Außenseite des Kunststoff-Karosserieteils eine Farbschicht aufweist und das Umformen des Kunststoff-Karosserieteils vor seiner Befestigung mit dem Kunststoff-Karosserieteil durch Beaufschlagung mit einem heißen Fluid erfolgt.

19. Karosserieteil nach Anspruch 18, **dadurch gekennzeichnet, dass** die auf der Außenseite des Kunststoff-Karosserieteils angeordnete Farbschicht von einer Transparentschicht abgedeckt ist.

## Claims

1. Process for manufacturing a formed synthetic-material vehicle-body part comprising the following stages:
- introducing a flat synthetic-material part into a form-determining tool;
- charging one side of the flat synthetic-material part with a hot fluid and heating the flat synthetic-material part until the synthetic material of the flat synthetic-material part softens;
- pressing the heated flat synthetic-material part charged with the hot fluid with the side opposing the side charged with the hot fluid facing towards the form-determining tool;
- cooling the formed synthetic-material part until the synthetic material of the formed synthetic-material part solidifies;
- separating the cooled formed synthetic-material part from the fluid and
- removing the formed synthetic-material part from the tool,
**characterised in that** the flat synthetic-material part provides a coloured layer on the side opposing the side charged with fluid, and the cooled formed synthetic-material part is attached to a vehicle-body shell after removal from the tool.

2. Process according to claim 1, **characterised in that** the fluid used has a lower solidification temperature than the temperature of the solidified formed synthetic-material part.

3. Process according to claim 1 or 2, **characterised in that** a gas, in particular water vapour, or an oil is used as the fluid.

4. Process according to any one of the preceding claims, **characterised in that** the coloured layer is located on a synthetic material carrier layer.

5. Process according to any one of the preceding claims, **characterised in that** the coloured layer is covered by a transparent layer on the side facing towards the form-determining tool.

6. Process according to any one of the preceding claims, **characterised in that** the fluid impinges on the synthetic-material part with a pressure > 1 bar, in particular > 5 bar.

7. Process according to any one of the preceding claims, **characterised in that** the fluid impinging on the synthetic-material part provides a temperature ≥110°C, in particular ≥120°C.

8. Process according to any one of the preceding claims, **characterised in that** the formed synthetic-material part is attached to the vehicle-body shell, in particular, by gluing or welding.

9. Process according to any one of the preceding claims, **characterised in that** the formed synthetic-material part is attached to a restored and/or straightened vehicle-body shell.

10. Process according to claim 8 or 9, **characterised in that** the formed synthetic-material part is attached to a metallic vehicle-body shell or to a vehicle-body shell made from fibre-reinforced synthetic material.

11. Process according to any one of claims 8 to 10, **characterised in that** the formed synthetic-material part is attached to a perforated vehicle-body shell.

12. Process according to any one of claims 8 to 11, **characterised in that** several mixed-material components of a vehicle-body shell, with and without attached formed synthetic-material part, form one vehicle body.

13. Process according to any one of claims 8 to 12, **characterised in that** the formed synthetic-material part is in contact with the vehicle-body shell over at least 30% of its area, in particular, at least 50% of its area.

14. Process according to any one of the preceding claims, **characterised in that** the hot fluid presses against the flat synthetic-material part with a pressure of at least 2 bar, in particular, at least 3.5 bar.

15. Process according to any one of the preceding claims, **characterised in that** the hot fluid presses against the flat synthetic-material part with a maximum pressure of 10 bar, in particular, a maximum pressure of 6 bar.

16. Process according to any one of the preceding claims, **characterised in that** the hot fluid presses against the flat synthetic-material part for a minimum of 1s, in particular, for a minimum of 3s.

17. Process according to any one of the preceding claims, **characterised in that** the hot fluid presses against the flat synthetic-material part for a maximum of 15s, in particular, for a maximum of 10s.

18. Vehicle-body part with a vehicle-body shell and a formed synthetic-material vehicle-body part manufactured with the process according to claim 1 attached to its outer side, wherein an inner side of the synthetic material vehicle-body part connected to the vehicle-body shell provides the contour of an outer side of the vehicle-body shell, wherein an outer side of the synthetic material vehicle-body part facing away from the vehicle-body shell provides a coloured layer and wherein the synthetic-material vehicle-body part is formed by charging with a hot fluid before it is attached to the synthetic material vehicle-body part.

19. Vehicle-body part according to claim 18, **characterised in that** the coloured layer arranged on the outer side of the synthetic material vehicle-body part is covered by a transparent layer.

## Revendications

1. Procédé pour fabriquer par formage un élément de carrosserie en matière plastique, comprenant les étapes suivantes :
- mise en place d'un élément plat en matière plastique dans un outil de formage ;
- exposition d'un côté de l'élément plat en matière plastique à un fluide chaud et chauffage de l'élément plat en matière plastique jusqu'à ramollissement de la matière plastique constituant l'élément plat en matière plastique ;
- pression à l'aide du fluide chaud du côté de l'élément plat en matière plastique chauffé qui est opposé au côté exposé au fluide chaud contre l'outil de formage ;
- refroidissement de l'élément en matière plastique formé jusqu'à solidification de la matière plastique constituant l'élément en matière plastique formé ;
- séparation de l'élément en matière plastique formé refroidi du fluide et
- retrait de l'élément en matière plastique formé de l'outil,
**caractérisé en ce que** l'élément plat en matière plastique présente une couche de peinture sur le côté qui est opposé au côté exposé au fluide chaud, et **en ce qu'**après son retrait de l'outil, l'élément en matière plastique formé refroidi est fixé sur un élément de carrosserie brut.

2. Procédé selon la revendication 1, **caractérisé en ce que** l'on utilise un fluide dont la température de solidification est inférieure à la température de l'élément en matière plastique formé solidifié.

3. Procédé selon la revendication 1 ou 2, **caractérisé en ce que** l'on utilise en tant que fluide un gaz, notamment de la vapeur d'eau, ou une huile.

4. Procédé selon l'une des revendications précédentes, **caractérisé en ce que** la couche de peinture repose sur une couche de support en matière plastique.

5. Procédé selon l'une des revendications précédentes, **caractérisé en ce que** la couche de peinture est recouverte sur le côté tourné vers l'outil de formage d'une couche transparente.

6. Procédé selon l'une des revendications précédentes, **caractérisé en ce que** le fluide sollicite l'élément en matière plastique avec une pression > 1 bar, notamment > 5 bars.

7. Procédé selon l'une des revendications précédentes, **caractérisé en ce que** le fluide sollicitant l'élément en matière plastique présente une température ≥ 110° C, notamment ≥ 120° C.

8. Procédé selon l'une des revendications précédentes, **caractérisé en ce que** l'élément en matière plastique formé est fixé sur l'élément de carrosserie brut par collage ou soudage.

9. Procédé selon l'une des revendications précédentes, **caractérisé en ce que** l'élément en matière plastique formé est fixé sur un élément de carrosserie brut réparé ou redressé.

10. Procédé selon la revendication 8 ou 9, **caractérisé en ce que** l'élément en matière plastique formé est fixé sur un élément de carrosserie brut en métal ou sur un élément de carrosserie brut en matière plastique renforcée aux fibres de verre.

11. Procédé selon l'une des revendications 8 à 10, **caractérisé en ce que** l'élément en matière plastique formé est fixé sur un élément de carrosserie brut perforé.

12. Procédé selon l'une des revendications 8 à 11, **caractérisé en ce que** plusieurs éléments de carrosserie bruts composés d'un mélange de différents matériaux et recouverts ou non d'un élément en matière plastique formé constituent une carrosserie.

13. Procédé selon l'une des revendications 8 à 12, **caractérisé en ce que** l'élément en matière plastique formé est en contact avec l'élément de carrosserie brut avec au moins 30% de sa surface, notamment avec au moins 50% de sa surface.

14. Procédé selon l'une des revendications précédentes, **caractérisé en ce que** le fluide chaud exerce une pression d'au moins 2 bars, notamment d'au moins 3,5 bars sur l'élément en matière plastique plat.

15. Procédé selon l'une des revendications précédentes, **caractérisé en ce que** le fluide chaud exerce une pression maximale de 10 bars, notamment maximale de 6 bars, sur l'élément en matière plastique plat.

16. Procédé selon l'une des revendications précédentes, **caractérisé en ce que** le fluide chaud exerce une pression sur l'élément en matière plastique plat pendant au moins 1 s, notamment pendant au moins 3 s.

17. Procédé selon l'une des revendications précédentes, **caractérisé en ce que** le fluide chaud exerce une pression sur l'élément en matière plastique plat pendant au maximum 15 s, notamment pendant au maximum 10 s.

18. Élément de carrosserie comprenant un élément de carrosserie brut et un élément de carrosserie en matière plastique formé qui a été fabriqué avec le procédé selon la revendication 1 et qui est assemblé avec le côté extérieur dudit élément de carrosserie brute, sachant qu'un côté intérieur de l'élément de carrosserie en matière plastique présente le contour d'un côté extérieur de l'élément de carrosserie brut, qu'un côté extérieur de l'élément de carrosserie en matière plastique opposé à l'élément de carrosserie brut présente une couche de peinture et que le formage de l'élément de carrosserie en matière plastique est réalisé avant son assemblage avec l'élément de carrosserie en matière plastique en l'exposant à un fluide chaud.

19. Élément de carrosserie selon la revendication 18, **caractérisé en ce que** la couche de peinture appliquée sur le côté extérieur de l'élément de carrosserie en matière plastique est recouverte d'une couche transparente.
